# EUROPÄISCHE PATENTANMELDUNG

(11) **EP 2 741 250 A1**
(43) Veröffentlichungstag der Anmeldung: **11.06.2014**
(21) Anmeldenummer: 13195894.4
(22) Anmeldetag: 05.12.2013
(51) Int. Cl.: G06Q 30/02

(54) **Treuepunktkartensystem**

(30) Priorität: 05.12.2012 DE 102012023696
(71) Anmelder: Stickin AG, 77652 Offenburg (DE)
(72) Erfinder: Endres, Jeremias, 76133 Karlsruhe (DE); Schulze, Alexander, 77797 Ohlsbach (DE); Seifert, Michael, 77799 Ortenberg (DE)
(74) Vertreter: Maucher Börjes Jenkins

(57) **Zusammenfassung**

Erfindungsgemäß ist eine Treuepunktkartenvorrichtung geschaffen, umfassend mehrere Treuepunktkarten, die miteinander und/oder mit einem gemeinsamen Träger verbunden sind und die voneinander bzw. von dem Träger abtrennbar sind, wobei jede der Treuepunktkarten einen individuellen maschinenlesbaren Code aufweist. Außerdem ist ein Verfahren geschaffen, bei dem, in Reaktion auf den Abschluss eines Vorgangs eines ersten Typs zwischen einem Anbieter und einem Empfänger, das Abtrennen einer Treuepunktkarte aus einer Treuepunktkartenvorrichtung der vorhergehend beschriebenen Art vorgesehen ist, sowie die Ausgabe der abgetrennten Treuepunktkarte an den Empfänger. Der Empfänger kann erhaltene Treuepunktkarten sammeln und wahlweise elektronisch erfassen (Fig. 1).

## Beschreibung

Es ist bekannt, beispielsweise in kleinen, vorwiegend eigentümergeführten Geschäften, die zu einem beträchtlichen Teil über Laufkundschaft Umsätze erwirtschaften, wie Cafés, Treuepunktkarten an Kunden auszugeben. Solche Treuepunktkarten können bei einem Kauf bzw. einer Bestellung gestempelt werden. Wird eine vorgegebene Anzahl von Stempeln erreicht, so erhält der Kunde gegen Rückgabe der voll gestempelten Treuepunktkarte eine Treueprämie, beispielsweise in Form eines Nachlasses beim nächsten Kauf bzw. der nächsten Bestellung oder Ausgabe eines Produktes bzw. einer Dienstleistung.

Beispielsweise können die Kunden eines Cafés für jede Kaffeebestellung einen Treuestempel mit der Maßgabe sammeln, dass nach zehn bezahlten Kaffees der elfte bestellte Kaffee umsonst ist. Dieses System verbessert nachweislich die Kundenbindung.

Nachteilig an solchen konventionellen Treuepunktkarten ist unter anderem, dass der Träger sie mit sich führen muss und sie nicht auf andere Medien portierbar sind. Zudem können bei konventionellen Treuepunktkarten im Regelfall keine personenbezogen Nutzer- & Nutzungsdaten gewonnen werden. Darüber hinaus sind konventionelle Treuepunktkarten relativ einfach fälschbar.

Des Weiteren sind Treuepunktkarten in digitaler Form bekannt. Solche Systeme sehen beispielsweise vor, dass den betroffenen Geschäften ein anbieter- bzw. ausgabestellenspezifischer Universal-QR-Code zu Verfügung gestellt wird, der vom Anbieter ausgedruckt und vor Ort vorgehalten werden muss. Bei einer bonusprämierten Bestellung kann dieser Universal-QR-Code durch einen Kunden abfotografiert und ein digitalisierter "Stempel" abgespeichert werden, beispielsweise mittels eines Smartphones. Sobald der Kunde eine bestimmte Anzahl digitaler "Stempel" gespeichert hat, kann er diese gegen eine Treueprämie einlösen.

Nachteilig an solchen bestehenden digitalen Treuepunktkartensystemen ist unter anderem, dass die Universal-QR-Codes nicht vollumfänglich fälschungssicher sind und ein solches System voraussetzt, dass der Kunde unmittelbar bei der Bestellung über ein entsprechend ausgestattetes bzw. geeignetes Smartphone verfügt und dieses zeitnah einen Zugang zum mobilen Internet aufbauen kann.

Aufgabe der vorliegenden Erfindung ist es, diese Nachteile zu vermeiden.

### Zusammenfassung der Erfindung

Erfindungsgemäß ist eine Treuepunktkartenvorrichtung geschaffen, umfassend mehrere Treuepunktkarten, die miteinander und/oder mit einem gemeinsamen Träger verbunden sind und die voneinander bzw. von dem Träger abtrennbar sind, wobei jede der Treuepunktkarteneinen individuellen maschinenlesbaren Code aufweist.

Die Treuepunktkarten können aus einfachem Papier (Blättern), oder aus verstärktem, kartonartigen Papier gefertigt sein. Alternativ oder zusätzlich können die Treuepunktkarten Kunststoff oder andere geeignete Materialien enthalten. In weiteren Ausgestaltungen können die Treuepunktkarten foliert, laminiert oder beschichtet sein.

In einer Ausgestaltung der Erfindung können die Treuepunktkarten durch Aufkleber gebildet sein, die auf dem gemeinsamen Träger aufgeklebt sind. Bei Vergabe einer derartig gestalteten Treuepunktkarte wird der Aufkleber von dem Träger abgezogen und kann anschließend z.B. auf ein Produkt aufgebracht werden, welches der Empfänger erworben hat.

In einer weiteren Ausgestaltung der Erfindung können die Treupunktkarten vor Ort aus einer entsprechenden technischen Vorrichtung gedruckt oder anderweitig erzeugt und wie oben aufgeführt vom Anbieterbetrieb ausgegeben werden.

Mittels der Codes kann jeder Vorgang, beispielsweise der Kauf eines Produktes oder einer Dienstleistung individuell dargestellt und benutzer-, anbieter-, sowie orts- und zeitspezifisch erfasst werden. Die Zeiterfassung erfolgt vorzugsweise automatisch beim Einscannen des Codes. Erfolgt das Einscannen unmittelbar nach Abschluss des Kaufvorgangs, so wird dabei im Wesentlichen auch der Zeitpunkt des Kaufvorgangs erfasst. Anderenfalls kann der Kaufzeitpunkt auch separat erfasst werden.

Jede Treuepunktkarte entspricht einem Bonuspunkt. Bonuspunkte können somit gesammelt werden, indem die entsprechenden Treuepunktkarten aufbewahrt oder die auf den Treuepunktkarten aufgebrachten Codes elektronisch erfasst und gespeichert werden. Erfindungsgemäß können vom Anbieter jedem Bonuspunkt auch ein währungsabhängiger Wert zugewiesen werden. In dieser Ausgestaltung können gesammelte Treuepunktkarten direkt gegen eine dem Geldwert der gesammelten Treuepunktkarten entsprechende Treueprämie eingelöst werden, die beispielsweise vom Anbieter selbst oder ein mit dem Anbieter verbundenes Unternehmen ausgegeben wird. Auch in dieser Ausgestaltung führt das Einlösen der Treuepunktkarten zu deren Entwertung, beispielsweise durch "Sperren" der entsprechenden Codes in einer zentralen Datenbank, wie nachfolgend beschrieben.

Vorzugsweise ist der maschinenlesbare Code durch einen QR-Code gebildet, der beispielsweise durch ein mobiles Endgerät (z.B. ein Smartphone) abfotografierbar ist. Damit lässt sich der Abschluss von (Kauf- oder Bestell-)Vorgängen mittels handelsüblicher Smartphones erfassen, die mittlerweile weit verbreitet sind und deshalb weitgehend vorausgesetzt werden können. Die Bereitstellung spezieller elektronischer Lesevorrichtungen erübrigt sich damit. Es können jedoch auch andere maschinenlesbare Codes zum Einsatz kommen, z.B. Barcodes.

Der Begriff mobiles Endgerät umfasst gängige mobile, internetfähige Telefone und "Organiser" mit Kamera- oder Scanfunktion und Speichermöglichkeit, einschließlich sogenannter Smartphones.

In einer bevorzugten Ausgestaltung sind die Treuepunktkarten in Form eines Gebindes, insbesondere eines Blockes oder Abrissheftes angeordnet, wobei die Treuepunktkarten mit einem gemeinsamen Träger verbunden sind, und wobei alle Treuepunktkarten dem Gebinde bzw. Block oder Abrissheft zugeordnet und über diesen identifizierbar sind. Jedem Gebinde bzw. Block oder Abrissheft ist ein individueller Identifikationscode zugeordnet. Anhand des Identifikationscodes (ID) ist es möglich, die Zugehörigkeit von Treuepunktkarten zu ihren jeweiligen Gebinden zu erkennen. Dadurch wird es beispielsweise ermöglicht, bei Verlust eines Gebindes die zugehörigen verbleibenden Treuepunktkarten zu sperren, z.B. die Gutschrift oder das Einlösen der entsprechenden Bonuspunkte zu verhindern.

Mit anderen Worten ist anhand einer Gebinde-ID feststellbar, welche QR-Codes dem entsprechenden Gebinde zugeordnet sind. Umgekehrt kann anhand eines QR-Codes festgestellt werden, in welchem Gebinde die zugehörige Treuepunktkarte enthalten ist oder war. Bei Lieferung von Gebinden an einen Anbieter der entsprechenden Treupunkte kann somit allein anhand der zugehörigen Gebinde-IDs festgestellt werden, welche QR-Codes zur Vergabe an dessen Kunden bereitgestellt worden sind. Darüber hinaus kann jede Lieferung von Gebinden eine individuelle ID aufweisen, wobei anhand der Liefer-ID alle in der Lieferung enthaltenen Gebinde-IDs identifizierbar sind.

Alternativ zur Bindung können die Treuepunktkarten auch mit dem Träger verklebt sein oder an den Verbindungsstellen jeweils eine Perforation oder Ähnliches aufweisen. Der Herausgeber der Treuepunktkarten(Anbieter) kann diese einfach aus dem Block oder Heft heraustrennen oder ablösen und an einen Empfänger (Benutzer) übergeben. Dem Kunden steht es nach Vorgabe des Anbieters frei, ob er die Treuepunktkarte sammeln oder mittels eines Smartphones den darauf vermerkten Code elektronisch erfassen will. So oder so erhält der Empfänger anbieterspezifisch einen Nachweis über abgeschlossene Vorgänge und kann nach einer vom Anbieter festgelegten Vorgangsanzahl von diesem eine Prämie - z.B. gemäß dem zweiten Vorgangstyp (s.u.) - entgegennehmen. Das Vorhandensein eines Smartphones beim Abschluss eines Vorgangs ist erfindungsgemäß nicht erforderlich. Dennoch hat der Kunde die Möglichkeit, die Vorgänge zu einem späteren Zeitpunkt elektronisch, vorzugsweise über einen mobilen oder stationären Internetzugang zu erfassen.

Vorteilhafterweise ist jeder der maschinenlesbaren Codes der Gestalt, dass jeder Vorgang individualisiert dargestellt und einem Anbieter zugeordnet werden kann.

Die Treuepunktkarten können mit zusätzlichen technischen oder nicht-technischen Informationen beidseitig versehen sein; beispielsweise kann die Vorderseite der Treuepunktkarte mit spezifischen Werbeinformationen bedruckt sein.

Erfindungsgemäß ist außerdem ein Verfahren geschaffen, bei dem, in Reaktion auf den Abschluss eines Vorgangs eines ersten Typs zwischen einem Anbieter und einem Empfänger, das Abtrennen einer Treuepunktkarte aus seinem spezifischen Abrissheft bzw. Block der oben beschriebenen Art vorgesehen ist, sowie die Ausgabe der abgetrennten Treuepunktkarte an den Empfänger. Der Empfänger kann erhaltene Treuepunktkarten sammeln und wahlweise elektronisch erfassen, wie oben beschrieben.

Dementsprechend sieht das Verfahren in einer Ausgestaltung folgende Schritte vor: Einlesen, insbesondere durch Abfotografieren mittels eines Smartphones, des Codes auf der abgetrennten Treuepunktkarte durch den Empfänger; und Speichern der durch den Code dargestellten Informationen auf einer Vorrichtung, insbesondere dem Smartphone, des Empfängers bei zeitnaher Übermittlung über das Internet an einen Server zur Vorgangsverifikation, benutzerspezifischen Speicherung und zum endgeräteabhängigen Datenabgleich (Synchronisation). Nach Durchführung dieser Schritte kann der Empfänger seine gesammelten Treuepunktkarten entsorgen, ohne den vom Anbieter vordefinierten Treuebonus zu verlieren, da die auf ihnen vermerkten Codes zentral digital gespeichert wurden. Er kann aber auch die Treuepunktkarten aufbewahren, um seine Treueprämie auch dann einlösen zu können, wenn ein Smartphone oder Internetzugang nicht zur Verfügung steht, vorausgesetzt, dass dies der Anbieter zulässt.

In einer Ausgestaltung der Erfindung ist ein Verfahren vorgesehen, das, in Reaktion auf das Einlesen des Codes, das Lokalisieren des Smartphones, beispielsweise durch Abfragen von GPS-Daten des Smartphones, und Anzeigen von ortsspezifischen Informationen auf dem Smartphone, umfasst. Beispielsweise kann dem Empfänger, d.h. dem Benutzer des Smartphones, eine orts- und zeitabhängige Werbung oder ein in der näheren Umgebung des Empfängers gültiges Verkaufsangebot angezeigt werden. So kann dem Benutzer beispielsweise eine Ermäßigung beim Kauf eines bestimmten Produkts in einem naheliegenden Geschäft einer bestimmten Ladenkette zeitgerecht über sein Smartphone-Display angeboten werden.

Vorzugsweise wird die orts- und/oder zeitabhängige Werbung von einem Server auf das Smartphone des Empfängers übertragen. Alternativ kann die Werbung jedoch auch auf dem Smartphone vorgespeichert sein, wodurch die Anzeige von Werbung auch dann möglich ist, wenn keine (Internet-)Verbindung zu dem Server besteht.

In einer weiteren Ausgestaltung der Erfindung ist es vorgesehen, in Reaktion auf das elektronische Einlesen eines Codes und das Erfassen von Empfängerdaten - beispielsweise der Email-Adresse des Empfängers der entsprechenden Treuepunktkarte - einen Kommunikationskanal zwischen dem Anbieter der Treuepunktkarte oder einem mit dem Anbieter verbundenen Unternehmen und dem Empfänger herzustellen.

Eine andere Ausgestaltung der Erfindung sieht vor, für jede durchgeführte Transaktion, insbesondere das Scannen eines QR Codes, dem Benutzer zusätzliche Punkte auf einem eigenen Punktekonto zuzuschreiben. Das Punktekonto kann auf dem Server, auf dem auch die Benutzerdaten abgelegt sind, geführt werden. Die zusätzlichen Punkte können dann in einem Prämienshop eingetauscht werden.

In einer Variante dieser Ausgestaltung können zusätzliche Punkte auch in Wettbewerben erworben werden, an denen der Benutzer beispielsweise über sein mobiles Endgerät teilnimmt. Beispielsweise können zusätzliche Punkte dadurch erworben werden, dass der Benutzer alle Anbieter des erfindungsgemäßen Treuepunktsystems innerhalb einer bestimmten geographischen Reichweite (z.B. in einer bestimmten Stadt) und/oder innerhalb eines bestimmten Zeitraums (z.B. an einem Tag) frequentiert und dort entsprechende QR-Codes sammelt.

Vorzugsweise umfasst das Verfahren das Bereitstellen eines Vorgangs eines zweiten Typs durch den Anbieter, in Reaktion auf das Anzeigen von auf der Vorrichtung des Empfängers gespeicherten Informationen, die die Speicherung einer vorbestimmten Anzahl von Codes bestätigen. Bei einem Vorgang des ersten Typs kann es sich um den Kauf eines Produktes handeln. Bei einem Vorgang des zweiten Typs kann es sich um das Einlösen einer Treueprämie handeln.

Vorzugsweise umfasst das Abfragen von Daten aus einer Datenbank auf einem Server, zur Freigabe des Vorgangs des zweiten Typs. Somit kann verhindert werden, dass "gesammelte" Codes mehr als einmal gegen eine entsprechende Prämie eingelöst werden. Dazu umfasst das Verfahren insbesondere das Verändern der abzufragenden Daten in Reaktion auf die Bereitstellung des zweiten Typs, um eine erneute Freigabe eines Vorgangs des zweiten Typs auf Grundlage derselben gespeicherten vorbestimmten Anzahl von Codes zu verhindern. Jeder Code ist folglich nur einmal benutzbar.

Vorzugsweise umfasst das Verfahren das Erzeugen von Informationen, die den Abschluss eines Vorgangs des zweiten Typs darstellen, und Speichern dieser Informationen auf einem Server. Daraus ergibt sich für den Anbieter die Möglichkeit, generell das (Kauf-)Verhalten von Kunden zu erfassen und zu analysieren.

In einer Ausgestaltung umfasst das Verfahren weiterhin das Speichern von Daten, die dem eingelesenen Code zugeordnet sind, in einer Datenbank auf einem Server, wobei die Daten vorzugsweise den Code umfassen, sowie Benutzerdaten, die den Empfänger identifizieren. Somit können die "gesammelten" Codes einem vorher registrierten Benutzer zugeordnet werden. Die Registrierung des Benutzers kann beispielsweise mittels elektronischer Übertragung von Benutzerdaten (z.B. Email-Adresse, Geburtsdatum, Name, etc.) erfolgen.

Vorzugsweise umfasst das Verfahren eine Anpassung mindestens eines Parameters des Vorgangs des zweiten Typs in Abhängigkeit vom Umfang der Benutzerdaten. Beispielsweise kann die Höhe einer Prämie abhängig vom Umfang der bereitgestellten Benutzerdaten sein. Damit soll dem Benutzer ein Anreiz geschaffen werden, möglichst umfangreiche Benutzerdaten dem System zur Verfügung zu stellen.

In einer alternativen Ausgestaltung umfasst das Verfahren die folgenden zusätzlichen Schritte: Sammeln von einer vom Anbieter vorbestimmten Anzahl von Treuepunktkarten durch den Empfänger; Herausgeben der gesammelten Treuepunktkarten an den Anbieter; Einlesen der Codes auf den gesammelten Treuepunktkarten durch den Anbieter; Abschluss eines Vorgangs eines zweiten Typs zwischen dem Empfänger und dem Anbieter; Erzeugen von Informationen, die den Abschluss des Vorgangs des zweiten Typs darstellen; und Speichern der erzeugten Informationen auf einem Server.

Somit wird dem Empfänger auch die Möglichkeit gegeben, die Treuepunkte in Form der Codes auf den Treuepunktkarten ohne Einsatz eines Smartphones einzulösen. Die elektronische Erfassung der Treuepunktkarten kann beim Einlösen der Treuepunkte durch den Anbieter erfolgen. Dem Anbieter ist es außerdem möglich, den Abschluss des Vorgangs des zweiten Typs, d.h. beispielsweise das Einlösen einer Treueprämie, elektronisch zu erfassen und das damit verbundene Kundenverhalten zu analysieren.

### Beschreibung beispielhafter Ausgestaltungen

Die vorliegende Erfindung wird nachfolgend anhand beispielhafter Ausgestaltungen und mit Bezugnahme auf die beiliegenden Figuren beschrieben.

Gemäß einer Ausgestaltung der Erfindung ist vorgesehen, Treuepunktkarten auszugeben, die einen alphanummerischen Code aufweisen, der vorzugsweise auch als Handy-/Scanner-lesbaren QR-Code ausgebildet ist, wobei dieser alphanummerische Code eine Information über den Anbieterbetrieb einerseits und eine vorgangsindividualisierende Information andererseits enthält.

Es wird für jeden bonusfähigen Vorgang (Typ 1) jeweils eine eigene, individuelle Treuepunktkarte vom Anbieter (z.B. Cafe) ausgegeben, so dass der anwendende Kunde (Benutzer) anschließend (beispielsweise) dreizehn individuelle Treuepunkte über einen gewissen Zeitraum abhängig von seinem anbieterspezifischen Konsumverhalten über ein Smartphone erfassen kann, um anschließend den vierzehnten Kaffee kostenfrei zu erhalten.

Das erfindungsgemäße System bietet den Vorteil, dass auch anwendende Kunden, die kein Smartphone besitzen, von diesem Bonussystem Gebrauch machen können, wenn sie die vom Anbieter vorgegebenen Anzahl an Treuepunktkarten aufbewahren und anschließend beim darüber hinausgehenden Vorgang vorlegen. Gleichzeitig ist das erfindungsgemäße System fälschungssicher, weil nämlich jeder Vorgang für jeweils einen Anbieterbetrieb individuell codiert ist. Darüber ermöglicht das erfindungsgemäße System das zeit- und ortsungebundene Erfassen von Vorgängen über die auf den Treuepunktkarten vermerkten Codes. So können Anbieter bzw. deren Servicekräfte selbst unter zeitlichem Druck jedem Kunden einen Treuepunkt übergeben, ohne dass hierfür zusätzliche Zeit aufgewendet werden müsste.

Es ist vorgesehen, dass die Ausgabe des vom Anbieter vordefinierten Treuebonus anschließend in einem zentralen Server erfasst und diese Informationen an den betreffenden Anbieterbetrieb zurückgegeben wird, der anschließend die ausgegebenen Treueboni als Werbeausgabe steuerlich geltend machen kann.

Es ist vorgesehen, die Treuepunktkarten dem anwendenden Betrieb in Form eines Abreisblockes mit einer vordefinierten Zahl individueller Treuepunktkarten als Versandgut zur Verfügung zu stellen.

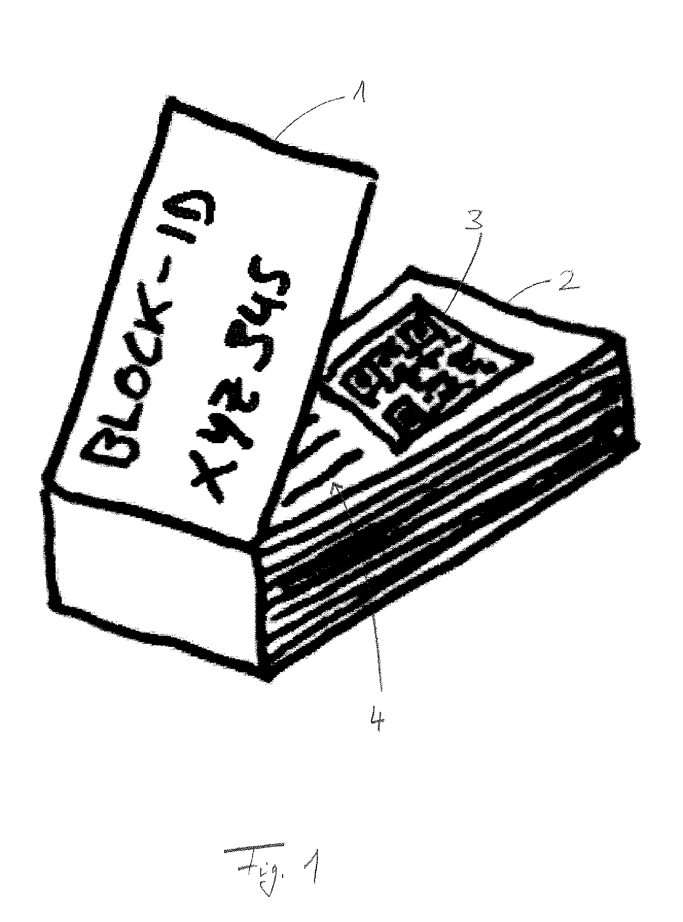

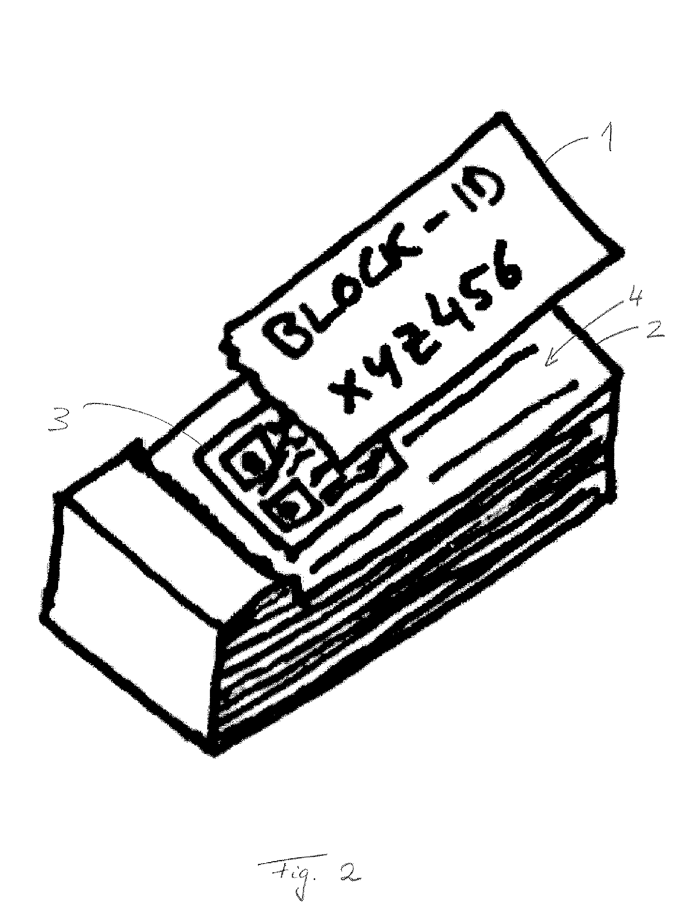

Die Figuren 1 und 2 zeigen einen Abreißblock nach einer beispielhaften Ausgestaltung der vorliegenden Erfindung. Der Abreißblock umfasst ein Deckblatt 1, auf dem eine Identifikationsnummer (Block-ID XYZ456) des Abreißblocks angegeben ist. Der Abreißblock umfasst weiterhin eine Vielzahl von Treuepunkkarten 2, die jeweils mit einem individuellen QR-Code 3 bedruckt sind. Außerdem sind die Treuepunktkarten 2 mit zusätzlichen Benutzerinformationen 4 (z.B. Werbung) bedruckt. Wie oben beschrieben sind alle QR-Codes 3 des Blocks der Block-ID zugeordnet, so dass alle Treuepunktkarten des Blocks über die Block-ID identifizierbar sind.

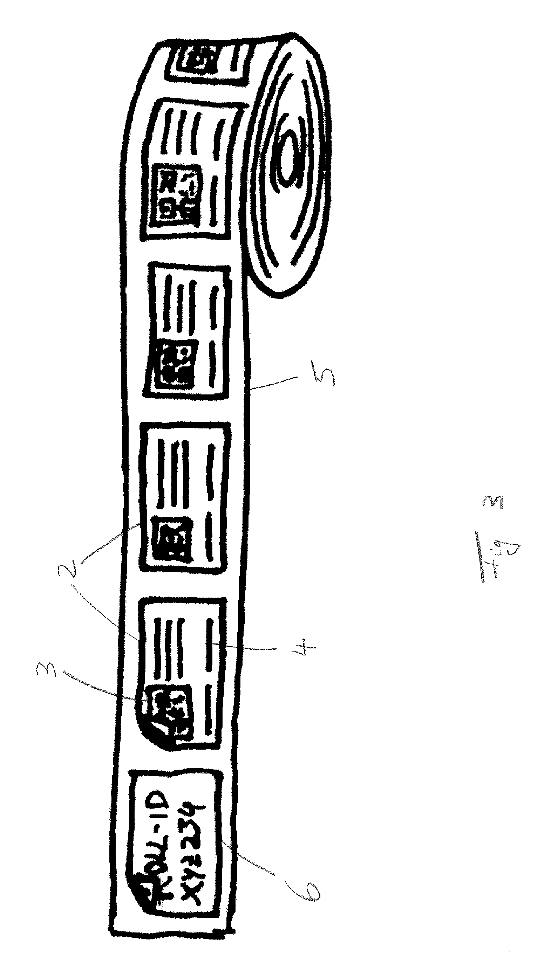

Die Figur 3 zeigt ein alternatives Ausführungsbeispiel der vorliegenden Erfindung, wobei die Treuepunktkarten 2 als Aufkleber auf einer Rolle 5 ausgestaltet sind. Die Aufkleber können durch Abziehen von der Rolle 5 getrennt und anschließend auf Produkte geklebt werden, deren Kauf mit einem Treuepunkt belohnt werden soll. Ein Aufkleber 6 ist mit einer Identifikationsnummer (Roll-ID XYZ234) der Rolle 5 versehen. Analog zu dem vorhergehenden Ausführungsbeispiel sind alle QR-Codes der Aufkleber der Rolle 5 der Roll-ID zugeordnet.

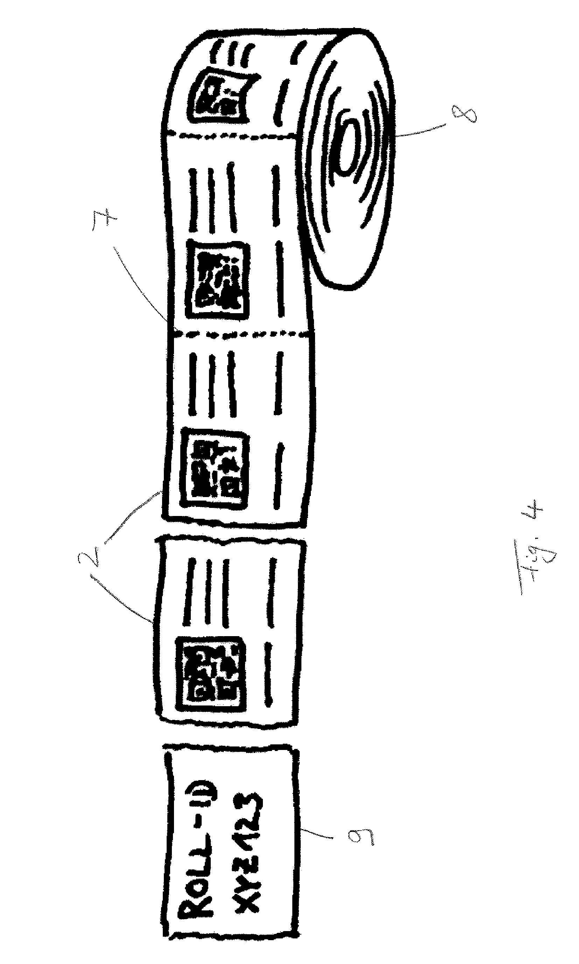

Die Figur 4 zeigt ein weiteres Ausführungsbeispiel, wobei die Treuepunktkarten 2 über eine perforierte Verbindungsstelle 7 miteinander verbunden sind und zu einer Rolle 8 aufgerollt werden können. In diesem Ausführungsbeispiel ist eine Abreißkarte 9 vorgesehen, die ebenfalls über eine perforierte Verbindungsstelle mit den Treuepunktkarten 2 verbunden und mit einer Identifikationsnummer (Roll-ID XYZ123) versehen ist, über die alle Treuepunktkarten 2 der Rolle 8 identifizierbar sind.

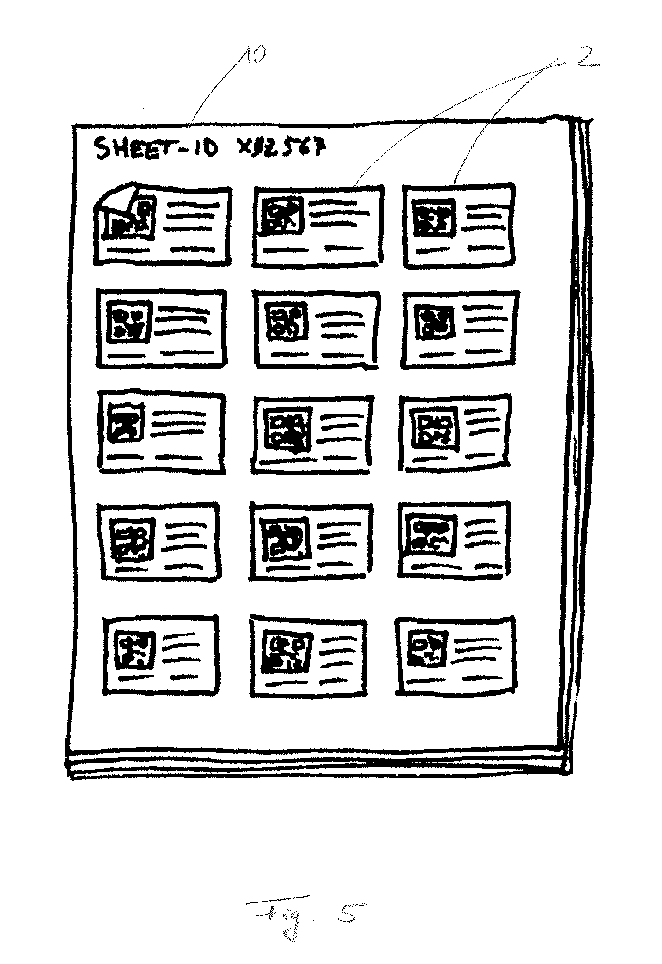

Die Figur 5 zeigt ein Ausführungsbeispiel, wobei die Treuepunktkarten 2 auf einem Bogen 10 aufgebracht sind (z.B. in Form von Abziehklebern), oder über perforierte Verbindungsstellen miteinander verbunden sind und gemeinsam den Bogen 10 bilden. Der Bogen 10 ist mit einer Identifikationsnummer (Sheet-ID XYZ567) versehen, anhand derer alle Treuepunktkarten des Bogens 10 identifizierbar sind.

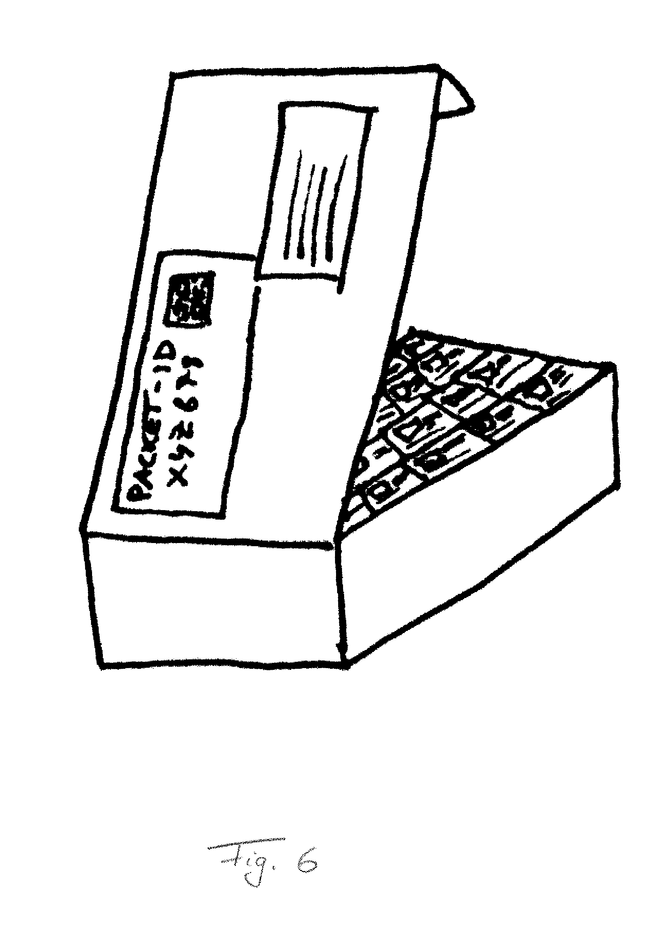

Die Figur 6 zeigt anhand eines Ausführungsbeispiels, dass die komplette Lieferung (beispielsweise in Paketform) einer Vielzahl von erfindungsgemäßen Treuepunktkartenvorrichtungen (z.B. in Form von Abreißblöcken gemäß den Figuren 1 und 2) einer Identifikationsnummer (Packet-ID XYZ678) zugeordnet sein kann, anhand derer alle Treuepunktkartenvorrichtungen der Lieferung identifizierbar sind.

## Patentansprüche

1. Treuepunktkartenvorrichtung, umfassend mehrere Treuepunktkarten, die miteinander und/oder mit einem gemeinsamen Träger verbunden sind und die voneinander bzw. von dem Träger abtrennbar sind, wobei jede der Treuepunktkarten einen individuellen maschinenlesbaren Code aufweist.

2. Treuepunktkartenvorrichtung nach Anspruch 1, wobei der maschinenlesbare Code durch einen QR-Code gebildet ist, der beispielsweise durch ein mobiles Endgerät abfotografierbar ist.

3. Treuepunktkartenvorrichtung nach Anspruch 1 oder 2, wobei die Treuepunktkarten in Form eines Gebindes, insbesondere eines Blockes oder Abrissheftes angeordnet sind, wobei vorzugsweise an den Verbindungsstellen jeweils eine Perforation vorgesehen ist oder die Treuepunktkarten mit dem Träger verklebt oder auf den Träger abziehbar aufgeklebt sind.

4. Treuepunktkartenvorrichtung nach einem der vorhergehenden Ansprüche, wobei jeder maschinenlesbare Code mehrere Teile umfasst, wobei ein Teil jeweils einem individuellen Vorgang zugeordnet ist, und ein anderer Teil jeweils dem Anbieter des Vorgangs zugeordnet ist.

5. Treuepunktkartenvorrichtung nach einem der vorhergehenden Ansprüche, wobei dem gemeinsamen Träger oder dem Gebinde ein individueller Identifikationscode zugeordnet ist, und wobei der Code jeder Treuepunktkarte, die mit dem gemeinsamen Träger verbunden bzw. in dem Gebinde enthalten ist, den Identifikationscode enthält oder diesem zugeordnet ist.

6. Verfahren, umfassend:
in Reaktion auf den Abschluss eines Vorgangs eines ersten Typs zwischen einem Anbieter und einem Empfänger, Abtrennen einer Treuepunktkarte aus einer Treuepunktkartenvorrichtung nach einem der vorhergehenden Ansprüche; und
Ausgabe der abgetrennten Treuepunktkarte an den Empfänger.

7. Verfahren nach Anspruch 6, umfassend:
Einlesen, insbesondere durch Abfotografieren mittels eines mobilen Endgerätes, des Codes auf der abgetrennten Treuepunktkarte durch den Empfänger; und
Speichern der durch den Code dargestellten Informationen auf einer Vorrichtung, insbesondere dem mobilen Endgerät, des Empfängers.

8. Verfahren nach Anspruch 7, umfassend, in Reaktion auf das Einlesen des Codes, das Lokalisieren des mobilen Endgerätes, beispielsweise durch Abfragen von GPS-Daten des mobilen Endgerätes, und Anzeigen von ortsspezifischen Informationen auf dem mobilen Endgerät.

9. Verfahren nach Anspruch 8, umfassend, in Reaktion auf das Einlesen des Codes, das Terminieren des Scanvorgangs, beispielsweise durch Abfragen von chronometrischen Daten des mobilen Endgerätes, und Anzeigen von zeitspezifischen Informationen auf dem mobilen Endgerät.

10. Verfahren nach einem der Ansprüche 6 bis 9, umfassend:
Bereitstellen eines Vorgangs eines zweiten Typs durch den Anbieter, in Reaktion auf das Anzeigen von auf der Vorrichtung des Empfängers gespeicherten Informationen, die die Speicherung einer vorbestimmten Anzahl von Codes bestätigen, und vorzugsweise das Abfragen von Daten aus einer Datenbank auf einem Server, zur Freigabe des Vorgangs des zweiten Typs.

11. Verfahren nach Anspruch 10, umfassend das Verändern der abzufragenden Daten in Reaktion auf die Bereitstellung des Vorgangs des zweiten Typs, um eine erneute Freigabe eines Vorgangs des zweiten Typs auf Grundlage derselben gespeicherten vorbestimmten Anzahl von Codes zu verhindern.

12. Verfahren nach Anspruch 10 oder 11, umfassend das Erzeugen von Informationen, die den Abschluss eines Vorgangs des zweiten Typs darstellen, und Speichern der erzeugten Informationen auf einem Server.

13. Verfahren nach einem der Ansprüche 6 bis 12, umfassend das Speichern von Daten, die dem eingelesenen Code zugeordnet sind, in einer Datenbank auf einem Server, wobei die Daten vorzugsweise den Code umfassen, sowie Benutzerdaten, die den Empfänger identifizieren, und vorzugsweise das Anpassen mindestens eines Parameters des Vorgangs des zweiten Typs in Abhängigkeit vom Umfang der Benutzerdaten.

14. Verfahren nach Anspruch 6, umfassend:
Sammeln von einer vorbestimmten Anzahl von Treuepunktkarten durch den Empfänger;
Herausgeben der gesammelten Treuepunktkarten an den Anbieter;
Einlesen der Codes auf den gesammelten Treuepunktkarten durch den Anbieter;
Abschluss eines Vorgangs eines zweiten Typs zwischen dem Empfänger und dem Anbieter;
Erzeugen von Informationen, die den Abschluss des Vorgangs des zweiten Typs darstellen; und
Speichern der erzeugten Informationen auf einem Server.

15. Verfahren nach einem der Ansprüche 6 bis 14, umfassend:
Ausdrucken der Treuepunktkarten an oder in der Nähe der Ausgabestelle für die Ausgabe der Treuepunktkarten an den Empfänger.
